Europäisches Patentamt

European Patent Office

Office européen des brevets

(19)

(11) Numéro de publication: **0 040 142**

**A1**

(12) **DEMANDE DE BREVET EUROPEEN**

(21) Numéro de dépôt: **81400723.3**

(22) Date de dépôt: **07.05.81**

(51) Int. Cl.³: **H 02 H 1/06**
**//H02H3/33**

(30) Priorité: **14.05.80 FR 8010815**

(43) Date de publication de la demande:
**18.11.81 Bulletin 81/46**

(84) Etats contractants désignés:
**AT BE CH DE GB IT LI NL SE**

(71) Demandeur: **ENERTEC**
**12 Place des Etats Unis**
**F-92120 Montrouge(FR)**

(72) Inventeur: **Andre, Raymond**
**8, rue des Cerisiers**
**F-91160 Longjumeau(FR)**

(74) Mandataire: **Bentz, Jean-Paul**
**GIERS SCHLUMBERGER 12, Place Des Etats Unis**
**F-92124 Montrouge Cedex(FR)**

(54) **Générateur de signaux fonctions d'un courant de donnée, alimenté par ce courant, et application aux relais de courant.**

(57) Dispositif pour délivrer un signal de sortie fonction d'au moins un paramètre d'un courant électrique de donnée, comprenant un circuit électronique (2) pour l'élaboration de ce signal.

Il comprend en outre, en série entre ses bornes d'entrée (6) et (7), un circuit d'alimentation (1) et une résistance de mesure (3) de valeur R ; le circuit d'alimentation (1) se comporte comme une source de tension pour le circuit d'élaboration (2) et, ce dernier comporte deux bornes de mesure (12) et (13) par lesquelles il est monté en parallèle sur la résistance (3) et entre lesquelles il présente une impédance (Ze) très supérieure à (R).

Ce dispositif, notamment utilisable comme relais de courant homopolaire, assure son alimentation à partir du courant de donnée.

Fig.1

EP 0 040 142 A1

- 1 -

Générateur de signaux fonctions d'un courant de donnée,
alimenté par ce courant, et application aux relais
de courant.

La présente invention concerne un dispositif pour délivrer un signal de sortie fonction d'au moins un paramètre d'un courant électrique, ce courant étant produit par une source de courant, étant appliqué à des première et seconde bornes d'entrée de ce dispositif, et constituant une donnée pour un circuit d'élaboration du signal de sortie, inclus dans ce dispositif.

Des dispositifs de ce type existent dans l'art antérieur, et un exemple en est donné par les relais électroniques de courant, appartenant à la classe plus large des relais de courant. Les relais de courant sont, de façon générale, des dispositifs destinés à recevoir, en tant que donnée, un courant électrique, ou plus exactement une fraction connue de ce courant, et à produire un signal de sortie, consistant en l'ouverture ou en la fermeture d'un circuit électrique, en fonction d'un paramètre du courant électrique, à savoir, communément, en fonction de la valeur de l'intensité de ce courant électrique.

Parmi les relais de courant, on connait, outre les relais ampèremétriques électroniques, relativement récents, les relais ampèremétriques électromécaniques.

Le principe fondamental de fonctionnement de ces relais est le même et consiste à comparer une grandeur de donnée, par exemple proportionnelle au courant de donnée, fourni par la source, à une grandeur de référence, et à produire le signal de sortie (ouverture ou fermeture d'un circuit électrique) en fonction du résultat de cette comparaison.

Par contre, les modalités de fonctionnement des relais électromécaniques et électroniques sont sensiblement différentes :

dans les relais électromécaniques, la grandeur de donnée est une force magnétique produite par le courant de donnée, et la grandeur de référence est constituée par la force mécanique d'un ressort préalablement taré; par construction, les forces magnétique et mécanique sont rendues antagonistes et la comparaison des grandeurs de donnée et de référence est ainsi équivalente à l'identification de la force (magnétique ou mécanique) qui l'emporte sur l'autre (respectivement mécanique ou magnétique); or ces forces, lorsqu'elles sont prédominantes, induisent par des déplacements de sens inverse, des états différents du relais (ouvert ou fermé) qui correspondent directement aux états du signal de sortie; au contraire, dans les relais électroniques, la grandeur de donnée est une grandeur électrique liée au courant de donnée, la grandeur de référence est une autre grandeur électrique, élaborée par le relais, et la comparaison de ces deux grandeurs électriques est effectuée par un comparateur électronique ; enfin, alors que, dans un relais ampèremétrique électromécanique, le paramètre surveillé du courant de donnée est nécessairement la valeur efficace de son intensité, puisque la force magnétique dépend de cette intensité selon des lois physiques intangibles, il est possible, au moyen d'un relais électronique, de surveiller tout paramètre de courant, autre que la valeur efficace de son intensité, susceptible d'être obtenu par traitement de la grandeur électrique de donnée.

Cependant, si le relais électronique présente, par rapport au relais électromécanique, l'avantage d'une précision très supérieure et de possibilités beaucoup plus variées, il présente aussi l'inconvénient de nécessiter, pour l'élaboration de la grandeur électrique de référence et l'accomplissement de l'opération de comparaison, le recours à une alimentation électrique auxiliaire.

Comme l'alimentation électrique du comparateur électronique, d'une part ne doit pas subir les fluctuations du courant de donnée, et d'autre part ne doit pas perturber ce courant, une solution évidente consiste à prévoir une source électrique auxiliaire indépendante pour fournir à ce comparateur l'alimentation nécessaire.

Or, l'obligation de prévoir une telle source auxiliaire est très désavantageuse pour de multiples raisons; en particulier l'installation supplémentaire que constituent cette source auxiliaire et sa connexion au relais augmente le coût total et diminue la fiabilité de l'exploitation de ce relais, celle-ci devenant aussi dépendante de la fiabilité de la source auxiliaire; en outre et surtout, la source auxiliaire entraîne une consommation permanente d'énergie, même lorsque le relais est dans un état de veille ou momentanément inutile.

Le but général de l'invention est précisément, au contraire, de tirer, de la source de courant de donnée, l'alimentation électrique nécessaire, afin de se débarrasser de la nécessité d'une source auxiliaire, sans introduire de perturbation gênante dans la donnée à analyser que constitue le courant fourni par la source.

Bien que l'invention s'applique de façon particulièrement avantageuse, comme il apparaîtra ci-après, au cas des relais électroniques de courant homopolaire, le problème général de l'invention, défini par le but précédemment énoncé, se pose dans un domaine plus large que celui des relais ampèremétriques, et concerne tous les dispositifs définis dans le paragraphe d'introduction de la présente description; en effet, ce problème se pose même lorsque l'opération à effectuer sur la grandeur électrique de donnée est un traitement différent de celui que constitue la comparaison à une grandeur électrique de référence, et par conséquent lorsque le circuit à alimenter est autre qu'un comparateur, et il se pose également lorsque le signal de sortie est autre qu'un signal tout ou rien tel qu'un signal ouvert ou fermé.

Le dispositif de l'invention, adapté à assurer sa propre alimentation électrique à partir du courant de la source de courant, qu'il reçoit en tant que donnée sur ses première et seconde bornes d'entrée, et comportant un circuit d'élaboration du signal de sortie, est essentiellement caractérisé en ce qu'il comprend en outre : un circuit d'alimentation à quatre bornes au moins, dont les première et seconde bornes sont respectivement raccordées auxdites première et seconde bornes d'entrée pour être traversées par le courant de ladite source; et une impédance de mesure montée en série entre la seconde borne dudit circuit d'alimentation et ladite seconde borne d'entrée, et traversée par ledit courant de source; ledit circuit d'élaboration comportant des première et seconde bornes de mesure par lesquelles il est branché en parallèle sur ladite impédance de mesure, des première et seconde bornes d'alimentation respectivement raccordées aux troisième et quatrième bornes dudit circuit d'alimentation, et une borne de sortie, ce circuit d'élaboration présentant entre ses bornes de mesure une impédance d'entrée supérieure à ladite impédance de mesure, cette impédance de mesure fournissant à ce circuit d'élaboration une tension image du courant de source, et ledit circuit d'alimentation constituant essentiellement, pour le circuit d'élaboration, une source de tension d'alimentation, et comprenant des moyens de régulation pour laisser librement circuler  entre ses deux premières bornes l'excédent de courant que possèle le courant de source par rapport au courant d'alimentation du circuit d'élaboration, qui est dérivé par ce dernier circuit entre lesdites troisième et quatrième bornes.

Un problème particulier se pose lorsque le courant de source est alternatif alors que le circuit d'élaboration du signal de sortie requiert une alimentation à polarisation sensiblement continue, et un autre but de l'invention est précisément de résoudre ce problème.

Le dispositif de l'invention, adapté à un courant de source alternatif, est essentiellement caractérisé en ce que ledit circuit d'alimentation comprend des première et seconde boucles reliant chacune les première et seconde bornes de ce circuit, en ce que ces première et seconde boucles contiennent respectivement des premier et second desdits moyens de régulation, en ce que des premier et second moyens sélectifs sont respectivement montés en série dans lesdites première et seconde boucles entre la première borne dudit circuit d'alimentation et, respectivement, lesdits premier et second moyens de régulation, pour interdire aux alternances respectivement négatives et positives dudit courant de source l'accès auxdites première et seconde boucles, en ce que la troisième borne dudit circuit d'alimentation est reliée à la première boucle entre ledit premier moyen sélectif et ledit premier moyen de régulation, en ce que la quatrième borne dudit circuit d'alimentation est reliée à la seconde boucle entre ledit second moyen sélectif et ledit second moyen de régulation, et en ce que les première et seconde boucles contiennent respectivement des premier et second moyens d'accumulation d'énergie, disposés entre la seconde borne dudit circuit d'alimentation et les premier et second moyens sélectifs respectifs, et propres à emmagasiner une partie au moins de l'énergie de chacune des alternances respectivement positives et négatives du courant de source et à la restituer pendant l'alternance suivante, ledit courant d'alimentation du circuit d'élaboration circulant de la première borne du circuit d'alimentation vers ledit second moyen d'accumulation pendant les alternances positives du courant de source, et du premier moyen d'accumulation vers la première borne du circuit d'alimentation pendant les alternances négatives de ce même courant de source.

De façon plus précise, lesdits premier et second moyens d'accumulation sont respectivement montés en parallèle sur lesdits premier et second moyens de régulation, et ceux-ci maintiennent entre leurs bornes respectives, dès que ledit excédent de courant atteint une valeur minimale prédéterminée, une différence de potentiel sensiblement indépendante de l'intensité de cet excédent de courant.

L'impédance de mesure est par exemple essentiellement constituée par une résistance, l'un au moins des moyens sélectifs est constitué par une diode, l'un au moins des moyens de régulation est constitué par une diode Zener, l'un au moins des moyens d'accumulation d'énergie comprend un condensateur.

Il peut arriver, et c'est notamment le cas dans les relais de courant homopolaire, que le courant de source soit constitué par la somme vectorielle de N courants élémentaires qui, en l'absence de défaut, sont approximativement sinusoïdaux, de même amplitude, de même fréquence F, mais déphasés entre eux de 360 °/N. Par exemple, la source de courant peut être constituée par un transformateur à tore d'induction, connu en soi, disposé autour d'un câble de transport de haute ou moyenne tension triphasée d'un réseau de distribution électrique. En théorie, les trois courants élémentaires (N = 3) induits dans le transformateur sont rigoureusement sinusoïdaux, de même amplitude, de même fréquence F (par exemple 50 Hz) et déphasés de I20 ° les uns par rapport aux autres, de sorte qu'ils s'équilibrent parfaitement, c'est à dire que le courant de source produit par le transformateur et résultant de la somme vectorielle de ces trois courants élémentaires est parfaitement nul. Cependant, en pratique, les courants ne sont pas exactement sinusoïdaux mais contiennent des harmoniques qui les affectent de façon semblable de sorte que, même si les composantes de ces courants élémentaires, qui sont liées à la fréquence fondamentale F, s'équilibrent parfaitement pour donner une somme nulle, il existe un petit courant de source résiduel à la fréquence N x F, c'est à dire I50 Hz dans l'exemple choisi, résultant de la somme des harmoniques. Lorsqu'un défaut asymétrique apparaît dans l'équilibre de ces N courants, par exemple lorsque l'amplitude de l'un d'eux varie en raison d'un défaut d'isolation, par rapport à la terre, du câble qui transporte la haute ou la moyenne tension produisant ce courant élémentaire dans le transformateur à tore, il apparait, dans le courant de source résultant, une composante de fréquence F, d'amplitude généralement très supérieure au courant de source résiduel, et dénommé courant homopolaire.

Un dispositif conforme à l'invention , destiné à produire un signal de sortie indiquant un défaut dans l'équilibre de N courants élémentaires, accompagné de l'apparition d'un courant homopolaire, est caractérisé en ce que le circuit d'élaboration du signal de sortie comprend : un filtre comportant au moins une première borne reliée à ladite impédance de mesure, pour recevoir ladite tension image du courant de source, et une seconde borne pour délivrer une tension filtrée correspondant à la tension image débarrassée au moins de ses harmoniques de fréquence égale à N x F; et un détecteur de dépassement de seuil, comprenant une première borne reliée à la seconde borne du filtre, et une borne de sortie constituant ladite borne de sortie dudit circuit d'élaboration.

Le courant de source résiduel maintient le dispositif à l'état de veille et le seuil à partir duquel le courant homopolaire doit entraîner un changement du signal de sortie peut ainsi être réglé très bas, et dans une large gamme, ce qui confère au dispositif une grande sensibilité et de nombreuses possibilités.

Lorsque le signal de sortie a pour seule fonction d'indiquer la présence ou l'absence d'un défaut, il est, de façon avantageuse utilisé pour commander un interrupteur, le dispositif constituant alors un relais; dans ce cas l'interrupteur commandé comporte au moins une borne d'alimentation reliée à l'une desdites troisième et quatrième bornes dudit circuit d'alimentation et une borne de commande reliée à la borne de sortie dudit circuit d'alimentation pour recueillir ledit signal de sortie et provoquer sélectivement l'ouverture et la fermeture d'un circuit électrique en fonction de ce signal de sortie.

Un mode particulier de réalisation de l'invention sera décrit ci-après, à titre indicatif et nullement limitatif, en référence au dessin annexé, sur lequel :

- La figure 1 est un schéma de réalisation d'un dispositif conforme à l'invention, auquel est associé un interrupteur commandé;

- La figure 2 est un schéma d'un circuit d'élaboration de signal de sortie utilisable dans le dispositif de la figure 1;

- La figure 3 est un schéma d'un autre circuit d'élaboration de signal de sortie;

- La figure 4 est un schéma d'un troisième circuit d'élaboration de signal de sortie;

- La figure 5 est un schéma d'un autre interrupteur commandé susceptible de coopérer avec un dispositif conforme à l'invention.

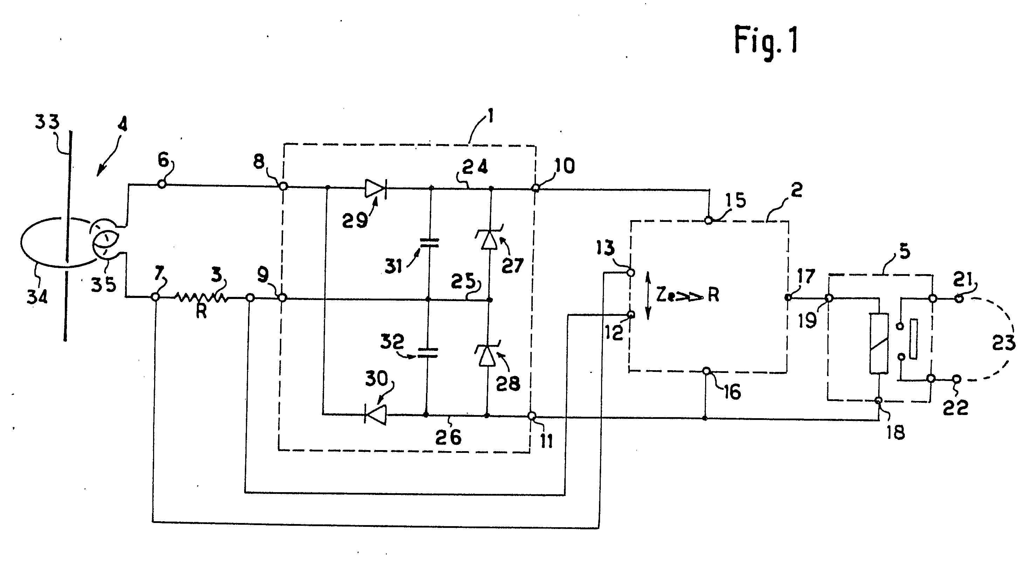

Comme le montre le schéma de la figure 1, le dispositif de l'invention, destiné à délivrer un signal de sortie qui est fonction d'une ou plusieurs caractéristique(s) d'un courant électrique qu'il reçoit en tant que donnée, et à tirer sa propre alimentation de ce courant, comprend essentiellement un circuit d'alimentation 1, un circuit d'élaboration du signal de sortie 2, et une impédance de mesure, de préférence une résistance 3. Sur la figure 1 sont également représentés une source de courant 4, qui fournit le courant de donnée, et un interrupteur commandé 5.

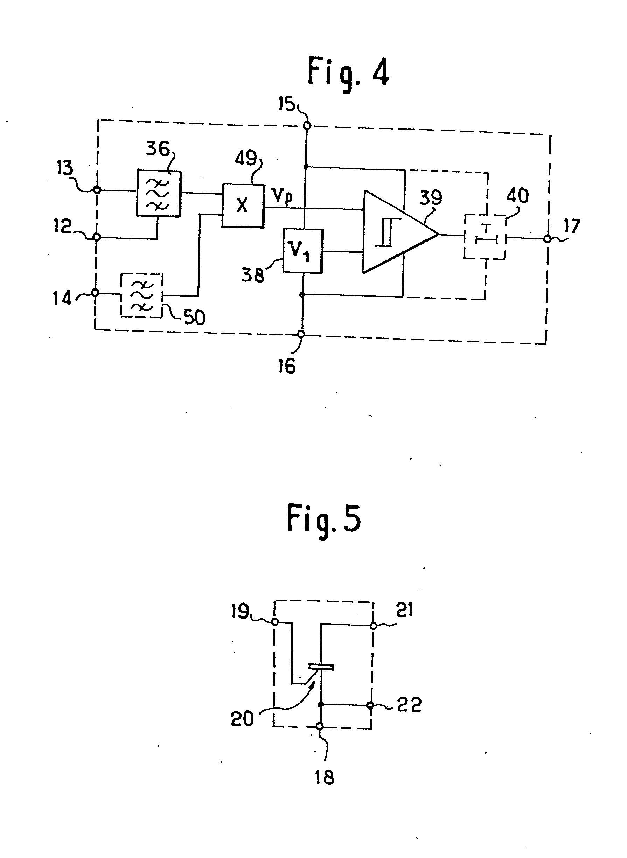

Le dispositif comprend des première et seconde bornes d'entrée, respectivement 6 et 7, reliées à la source de courant 4; le circuit d'alimentation comprend une première borne 8, reliée à la première borne d'entrée 6, une seconde borne 9, reliée à la seconde borne d'entrée 7 par l'intermédiaire de la résistance de mesure 3, montée en série entre ces bornes, et des troisième et quatrième bornes, respectivement 10 et 11; le circuit d'élaboration de signal de sortie comprend au moins des première, seconde, et éventuellement troisième (fig. 4) bornes de mesure, respectivement 12, 13 et 14 des première et seconde bornes d'alimentation, respectivement 15 et 16, et au moins une borne de sortie 17; ce circuit d'élaboration 2 est monté en parallèle sur la résistance de mesure 3 par ses première et seconde bornes de mesure 12 et 13, et ses première et seconde bornes d'alimentation 15 et 16 sont respectivement raccordées aux troisième et quatrième bornes 10 et 11 du circuit d'alimentation 1; enfin, l'interrupteur commandé 5 comporte une borne d'alimentation 18, reliée à l'une des troisième et quatrième bornes 10 et 11 du circuit d'alimentation 1, et une borne de commande 19 reliée à la borne de sortie 17 du circuit 2 d'élaboration du signal de sortie; l'interrupteur commandé 5 peut par exemple être constitué, comme le montre la figure 1, par un simple relais électromécanique, auquel cas les bornes 18 et 19 ont un rôle interchangeable, les bornes 18 et 19 pouvant aussi bien être reliées aux bornes 11 et 17 dans cet ordre, qu'à ces mêmes bornes 17 et 11 dans cet autre ordre, mais l'interrupteur commandé 5 peut aussi être constitué, comme le montre la figure 5, par un composant à semi-conducteur, par exemple un thyristor, auquel cas la borne de commande 19, qui correspond au circuit de la gachette 20, est nécessairement reliée à la borne de sortie 17 du circuit 2; dans les deux cas de figures, l'interrupteur 5 comporte deux bornes de sortie 21 et 22 entre lesquelles un courant électrique est, ou n'est pas, en fonction de la valeur du signal électrique présent sur la borne de sortie 17, autorisé à circuler, afin de réaliser la fermeture ou l'ouverture d'un circuit électrique 23, extérieur au dispositif.

Le circuit 2 présente, entre ses bornes de mesure 12 et 13 par lesquelles il est branché en parallèle sur la résistance 3, une impédance d'entrée Ze très supérieure à la valeur R de la résistance 3 dans la plage de fonctionnement normal de ce circuit 2. Par exemple, l'impédance d'entrée Ze peut être au moins égale à 100 x R. La résistance 3 peut ainsi être considérée comme étant traversée par la totalité du courant de source et comme fournissant au circuit 2 une tension qui est l'image de ce courant, c'est à dire qui évolue au cours du temps de la même façon que lui. Ainsi, pour le dispositif 1, 2, 3, dans son ensemble, la grandeur de donnée est le courant de la source 4, mais le circuit d'élaboration 2 exécute les fonctions qui lui sont assignées par construction à partir d'une grandeur de donnée qui est la tension aux bornes de la résistance 3.

Alors que le circuit d'alimentation 1 est alimenté par une source de courant, puisque les bornes 8 et 9 sont traversées par le courant de source, ce circuit 1 constitue lui-même, entre ses bornes 10 et 11, essentiellement une source de tension pour le circuit d'élaboration 2, ce dernier régulant lui-même le courant d'alimentation dont il a besoin en fonction de la tension appliquée par le circuit d'alimentation 1 entre les bornes 10 et 11.

A cette fin le circuit d'alimentation 1 comprend au moins un élément de régulation propre à maintenir à une valeur adéquate pour l'alimentation du circuit 2 la tension entre les bornes 10 et 11, tout en laissant librement circuler, dans le circuit 1 et entre les bornes 8 et 9, l'excédent de courant que présente le courant de source par rapport au courant d'alimentation que le circuit d'élaboration 2 puise entre les bornes 10 et 11, cet élément de régulation étant par exemple constitué par une diode Zener montée entre les bornes 8 et 9 ou par tout composant propre à maintenir entre ses bornes une différence de potentiel sensiblement indépendante du courant qui le traverse, au delà d'une valeur minimale de l'intensité de ce courant.

Plus précisément, dans le cas le plus fréquent d'un courant de source alternatif, et d'un circuit d'élaboration 2 destiné à être alimenté avec une polarité prédéterminée, le circuit d'alimentation 1 comprend une première et une seconde boucles, la première boucle passant par les bornes ou noeuds 8, 24, 25, 9 et la seconde boucle passant par les bornes ou noeuds 9, 25, 26, 8, ces deux boucles reliant donc chacune les deux premières bornes 8 et 9 du circuit 1; les première et seconde boucles contiennent des éléments de régulation respectifs 27, 28, constitués par des diodes Zener disposées entre les noeuds 24 et 25 pour la première boucle et entre les noeuds 25 et 26 pour la seconde boucle; les première et seconde boucles contiennent en outre des diodes respectives 29 et 30 disposées entre la borne 8 et le noeud 24 pour la première boucle et entre le noeud 26 et la borne 8 pour la seconde boucle, ces diodes 29 et 30 constituant des éléments sélectifs propres à interdire au courant de source de parcourir la première boucle dans le sens conventionnel 9, 25, 24, 8 et la seconde boucle dans le sens conventionnel 8, 26, 25, 9, de sorte que seules les alternances positives du courant de source ont accès à la première boucle et que seules les alternances négatives du courant de source ont accès à la seconde boucle; enfin les première et seconde boucles contiennent des condensateurs respectifs 31 et 32 montés en parallèle sur les diodes Zener 27 et 28, respectivement, ces condensateurs constituant des accumulateurs d'énergie électrique; le condensateur 31 emmagasine une partie de l'énergie électrique de chaque alternance positive du courant de source et le condensateur 32 emmagasine une partie de l'énergie de chaque alternance négative, de sorte qu'un courant positif d'alimentation circule pendant les alternances positives du courant de source, de la borne 8 à la borne 10, à la borne 11 en traversant le circuit 2, et vers le condensateur 32 préalablement chargé, et, pendant les alternances négatives du courant de source, du condensateur 31 préalablement chargé, à la borne 10, à la borne 11 en traversant le circuit 2, et vers la borne 8. Dès que le courant de source présente une intensité supérieure à une intensité minimale dont la valeur est fixée par les caractéristiques des diodes Zener 27 et 28, ces diodes établissent entre leurs bornes respectives 24, 25 et 26, 25, un potentiel sensiblement indépendant de la valeur de l'intensité du courant de source; ainsi il s'établit un potentiel V + à la borne 10 reliée au noeud 24 et un potentiel V − à la borne 11 reliée au noeud 26, ces potentiels étant repérés par rapport au potentiel de la borne 12, pris comme potentiel zéro.

Le circuit d'élaboration du signal de sortie 2 peut être pratiquement constitué par tout circuit électronique destiné à être alimenté entre les potentiels V+ et V- et propre à délivrer un signal fonction d'une ou plusieurs caractéristique(s) du courant de source, au moins lorsque ce courant a une intensité suffisante pour produire les différences de potentiel V+ et V- aux bornes des diodes Zener 27 et 28.

De même, la source 4 peut être a priori quelconque, pourvu que ce soit une source de courant. Sur la figure 1 est représentée une source constituée par un câble 33 de transport d'énergie électrique, par un tore d'induction 34 disposé autour du câble 33, et par un enroulement 35 enroulé sur le tore. Lorsque le câble 33 est constitué par un câble de transport d'un seul courant alternatif, le courant de source est un courant alternatif donnant lieu, aux bornes de la résistance 3, à une tension alternative, dont le circuit 2 peut surveiller la valeur, ce qui revient à surveiller l'intensité du courant circulant dans le câble 33.

Toutefois, l'application essentielle du dispositif est la réalisation d'un relais de courant homopolaire. Dans cette application, le câble 33 est constitué par un câble ou ligne de transport d'énergie électrique polyphasée , généralement triphasée. En théorie, les trois courants alternatifs transportés par ce câble sont sinusoidaux , de même fréquence F (généralement 50 Hz), de même amplitude, et déphasées les uns par rapport aux autres d'un angle de 120°. Il en résulte, toujours en théorie, que le courant de source produit par la source 4 aux bornes d'entrée 6 et 7 est nul. En pratique, dans des conditions normales d'exploitation, chacun des trois courants transportés subit des perturbations diverses, de sorte qu'un courant résiduel de fréquence 3F (150 Hz dans l'exemple), toutefois relativement faible,circule aux bornes 6 et 7.

Mais si une rupture se produit dans l'équilibre, en phase ou en amplitude, des courants transportés , ce qui traduit une anomalie dans les conditions d'exploitation, la source 4 produit un courant dit homopolaire, de fréquence F, et d'amplitude d'autant plus élevée que le déséquilibre est plus marqué entre les courants transportés. C'est le cas notamment lorsqu'un des conducteurs du câble 33, c'est à dire un conducteur assigné au transport de l'un des courants, présente un défaut d'isolation par rapport.à la terre.

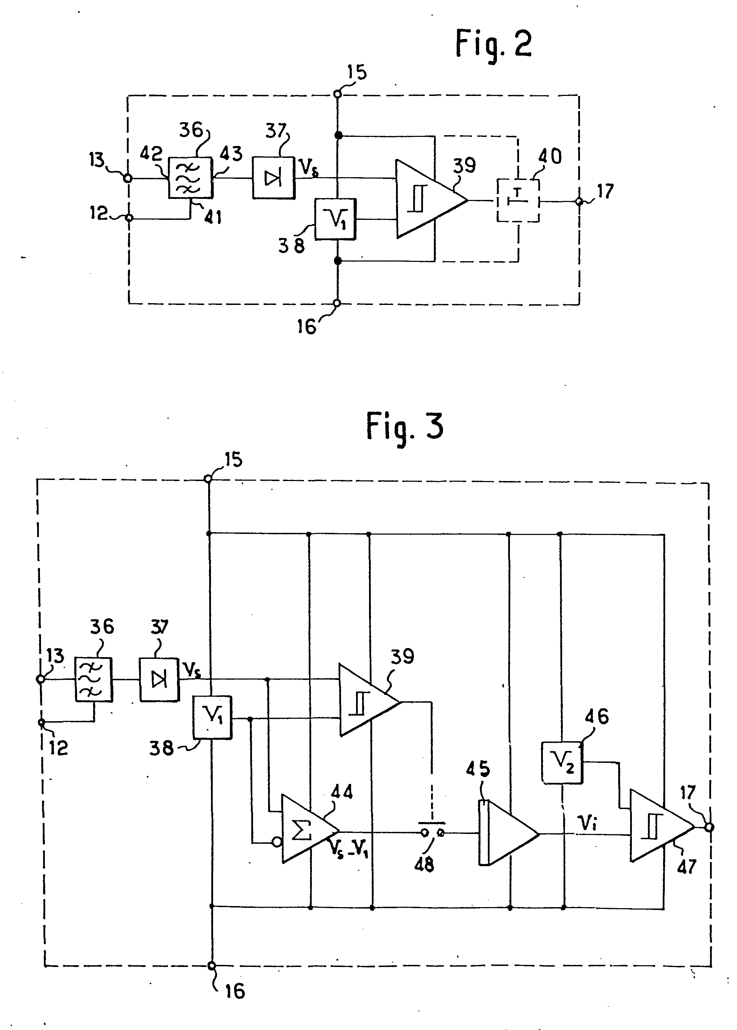

Les figures 2 et 3 illustrent, à titre indicatif, deux types différents de circuit 2 d'élaboration du signal de sortie utilisable dans le dispositif de l'invention appliqué à la réalisation d'un relais de courant homopolaire.

Sur la figure 2, 36 désigne un filtre d'harmoniques, 37 un élément redresseur, 38 un générateur de tension $V_1$ de référence,

39 un comparateur de module et 40 une cellule de temporisation, facultative.

Le filtre 36 comprend deux bornes d'un premier type 41 et 42 respectivement reliées aux bornes 12 et 13 et par lesquelles ce filtre reçoit la tension de donnée fournie par la résistance 3 ; ce filtre comprend une borne de sortie 43, ou borne de second type, sur laquelle il délivre la tension de donnée débarrassée de ses harmoniques de fréquence égale ou supérieure à 3F , c'est à dire à I50 Hz. Le générateur 38, alimenté entre les bornes d'alimentation 15 et 16, délivre une tension de référence $V_1$ qui est une fraction de la tension (V+)-(V-). Cette tension $V_1$ est fournie au comparateur 39, lequel est également alimenté entre les bornes 15 et 16 ; le comparateur reçoit d'autre part la tension $V_s$, c'est à dire la tension de sortie du filtre 36 redressée par l'élément 37, qu'il compare à la tension $V_1$ ; lorsque la tension $V_s$ est supérieure à la tension $V_1$ , le comparateur 39 délivre un signal qui, après un certain délai éventuel introduit par la cellule 40 dans le cas où celle-ci est prévue, constitue le signal de sortie du circuit 2, disponible à la borne 17. Comme le montre la figure 2, la cellule de temporisation éventuelle est alimentée entre les bornes 15 et 16.

Tant qu'aucun courant homopolaire n'apparaît, le circuit d'alimentation 1 met le circuit d'élaboration 2 en état de veille, grâce au courant résiduel qu'il reçoit. Toutefois la tension de fréquence 3F présente entre les bornes 12 et 13 est bloquée par le filtre 36, de sorte que le signal de sortie est dans un état "bas". Lorsqu'apparaît un courant homopolaire, la tension de fréquence F passe le filtre 36 et met le signal de sortie à un niveau "haut".

Le circuit 2 illustré sur la figure 3, comprend, avec les mêmes fonctions et les mêmes branchements, les éléments 36, 37, 38 et 39 précédemment décrits, mais ce circuit comprend en outre un amplificateur différentiel 44, un intégrateur 45, un générateur 46 de tension de référence $V_2$ et un second comparateur de module 47, tous alimentés entre les bornes 15 et 16 , ainsi qu'un interrupteur commandé 48. L'amplificateur différentiel 44 est relié à l'élément redresseur 37 et au générateur de de tension de référence $V_1$ et fournit à l'entrée de l'interrupteur commandé 48 une tension $V_s - V_1$ . Lorsque $V_s$ est supérieur à $V_1$, le comparateur de module 39 délivre un signal de sortie qui ferme l'interrupteur commandé, de sorte que l'intégrateur 45, qui est relié à la sortie de l'interrupteur 48 reçoit une tension nulle tant que $V_s$ est inférieur à $V_1$ et une tension $V_s - V_1$ lorsque $V_s$ est supérieur à $V_1$.

La sortie de l'intégrateur 45 délivre donc un signal nul tant que $V_s < V_1$ et une tension $V_i$ représentative de l'intégrale, en fonction du temps, de la tension $V_s - V_1$ lorsque $V_s > V_1$. Le générateur 46 de tension $V_2$ est semblable au générateur 38 et a pour fonction de délivrer une tension de référence $V_2$ qui est simplement une fraction de la tension (V+)-(V-). Le comparateur de module 47, qui reçoit les tensions $V_2$ et $V_i$, délivre sur la borne 17 un signal de sortie lorsque $V_i$ est supérieur à $V_2$, cette condition étant réalisée d'autant plus vite que la différence $V_s - V_1$ est plus grande.

Le circuit 2 de la figure 3 réalise ainsi une détection ampéremétrique temporisée, à temps dépendant de la gravité du défaut détecté, tandis que le circuit 2 de la figure 2, précédemment décrit, réalise, sans la cellule de temporisation 40, une détection ampéremétrique instantanée, et, avec la cellule 40, une détection ampéremétrique temporisée à temps constant.

Le circuit 2 représenté sur la figure 4 a pour fonction de réaliser une détection de puissance. Ce circuit est identique à celui de la figure 2, à ceci près qu'il comprend un multiplicateur 49 à la place de l'élément redresseur 37, une troisième borne de mesure 14 reliée à l'entrée du multiplicateur 49 et, éventuellement, un filtre d'harmoniques 50 entre la borne 14 et le multiplicateur 49. La borne 14 est, à l'extérieur du dispositif de l'invention, reliée à un transformateur de tension, connu en soi, délivrant une tension de mesure représentative de la tension homopolaire apparaissant en cas de défaut sur le câble 33. Cette tension de mesure, éventuellement filtrée en 50 dans un filtre semblable au filtre 36, est multipliée par le multiplicateur 49 par la tension de donnée filtrée par le filtre 36 et représentative du courant homopolaire

La tension $V_p$ résultant de ce produit et représentative de la puissance homopolaire , est ultérieurement traitée comme l'est la tension $V_s$ sur la figure 2. Le circuit de la figure 4 réalise donc, sans la cellule de temporisation 40, une détection de puissance instantanée et, avec cette cellule, une détection de puissance temporisée à temps constant.

En traitant la tension $V_p$ comme l'est la tension $V_s$ dans le circuit de la figure 3, il est également possible de réaliser une détection de puissance temporisée à temps dépendant.

R E V E N D I C A T I O N S

1. Dispositif pour délivrer un signal de sortie fonction d'au moins un paramètre d'un courant électrique, ce courant étant produit par une source de courant, étant appliqué à des première et seconde bornes d'entrée de ce dispositif, et constituant une donnée pour un circuit d'élaboration du signal de sortie, inclus dans ce dispositif, caractérisé en ce qu'il comprend en outre : un circuit d'alimentation à quatre bornes au moins, dont les première et seconde bornes sont respectivement raccordées auxdites première et seconde bornes d'entrée pour être traversées par le courant de ladite source ; et une impédance de mesure montée en série entre la seconde borne dudit circuit d'alimentation et ladite seconde borne d'entrée, et traversée par ledit courant de source ; ledit circuit d'élaboration comportant des première et seconde bornes de mesure par lesquelles il est branché en parallèle sur ladite impédance de mesure, des première et seconde bornes d'alimentation respectivement raccordées aux troisième et quatrième bornes dudit circuit d'alimentation, et une borne de sortie, ce circuit d'élaboration présentant entre ses bornes de mesure une impédance d'entrée supérieure à ladite impédance de mesure, cette impédance de mesure fournissant à ce circuit d'élaboration une tension image du courant de source, et ledit circuit d'alimentation constituant essentiellement, pour le circuit d'élaboration, une source de tension d'alimentation, et comprenant des moyens de régulation pour laisser librement circuler entre ses deux premières bornes l'excédent de courant que possède le courant de source par rapport au courant d'alimentation du circuit d'élaboration, qui est dérivé par ce dernier circuit entre lesdites troisième et quatrième bornes, ce dispositif assurant ainsi sa propre alimentation à partir du courant qu'il reçoit en tant que donnée.

2. Dispositif suivant la revendication 1, adapté à un courant de source alternatif, caractérisé en ce que ledit circuit d'alimentation comprend des première et seconde boucles reliant chacune les première et seconde bornes de ce circuit, en ce que ces première et seconde boucles contiennent respectivement des premier et second desdits moyens de régulation, en ce que des premier et second moyens sélectifs sont respectivement montés en série dans lesdites première et seconde boucles entre la première borne dudit circuit d'alimentation et, respectivement, lesdits premier et second moyens de régulation, pour interdire aux alternances respectivement négatives et positives dudit courant de source l'accès auxdites première et seconde boucles, en ce que la troisième borne dudit circuit d'alimentation est reliée à la première boucle entre ledit premier moyen sélectif et ledit premier moyen de régulation, en ce que la quatrième borne dudit circuit d'alimentation est reliée à la seconde boucle entre ledit second moyen sélectif et ledit second moyen de r régulation, et en ce que les première et seconde boucles contiennent respectivement des premier et second moyens d'accumulation d'énergie, disposés entre la seconde borne dudit circuit d'alimentation et les premier et second moyens sélectifs respectifs, et propres à emmagasiner une partie au moins de l'énergie de chacune des alternances respectivement positives et négatives du courant de source et à la restituer pendant l'alternance suivante, ledit courant d'alimentation du circuit d'élaboration circulant de la première borne du circuit d'alimentation vers ledit second moyen d'accumulation pendant les alternances positives du courant de source, et du premier moyen d'accumulation vers la première borne du circuit d'alimentation pendant les alternances négatives de ce même courant de source.

3. Dispositif suivant la revendication 2, caractérisé en ce que lesdits premier et second moyens d'accumulation sont respectivement montés en parallèle sur lesdits premier et second moyens de régulation, et en ce que ceux-ci maintiennent entre leurs bornes respectives, dès que ledit excédent de courant atteint une valeur minimale prédéterminée, une différence de potentiel sensiblement indépendante de l'intensité de cet excédent de courant.

4. Dispositif suivant l'une quelconque des revendications 2 et 3, caractérisé en ce que ladite impédance de mesure est essentiellement constituée par une résistance.

5. Dispositif suivant l'une quelconque des revendications 2 à 4, caractérisé en ce que l'un au moins des moyens sélectifs est constitué par une diode , et en ce que l'un au moins des moyens de régulation est constitué par une diode Zener.


        6. Dispositif suivant l'une quelconque des revendications 2
à 5, caractérisé en ce que l'un au moins des moyens d'accumulation
d'énergie comprend un condensateur.

        7. Dispositif suivant l'une quelconque des revendications
précédentes,le courant de source étant constitué par la somme vectorielle
de N courants élémentaires approximativement sinusoïdaux, de même fréquence F,et, en l'absence de défaut, de même amplitude et déphasés entre
eux de 360°/N,et ledit signal de sortie indiquant un défaut d'amplitude
ou de phase d'au moins un courant·élémentaire,
            caractérisé en ce que ledit circuit d'élaboration
du signal de sortie comprend : un filtre comportant au moins une première
borne reliée à ladite impédance de mesure, pour recevoir ladite tension
image du courant de source, et une seconde borne pour délivrer une tension
filtrée correspondant à la tension image débarrassée au moins de ses
harmoniques de fréquence égale à N x F ; et un détecteur de dépassement
de seuil, comprenant une première borne reliée à la seconde borne du
filtre, et une borne de sortie constituant ladite  borne de sortie dudit
circuit d'élaboration.


        8. Dispositif suivant l'une quelconque des revendications
précédentes , caractérisé en ce qu'il comprend en outre un interrupteur
commandé comportant au moins une borne d'alimentation reliée à 'l'une
desdites troisième et quatrième bornes dudit circuit d'alimentation et
une borne de commande reliée à la borne de sortie dudit circuit d'alimentation pour recueillir ledit signal·de sortie et provoquer sélectivement
l'ouverture et la fermeture d'un circuit électrique en fonction de ce
signal de sortie.


        9. Dispositif suivant l'une quelconque des revendications
précédentes, comprenant en outre ladite source de courant, caractérisé
en ce·que cette source est essentiellement constituée par un transformateur à tore d'induction disposé autour d'un câble d'un réseau de distribution électrique.

10. Application du dispositif suivant l'ensemble des revendications 7 à 9 à la réalisation d'un relais de courant homopolaire, alimenté sans source auxiliaire, dans laquelle ledit câble est un câble de transport d'énergie électrique triphasée.

Fig.1

1/3

0040142

0040142

2 / 3

# Fig. 2

# Fig. 3

# Fig. 4

# Fig. 5

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| | FR - A - 1 411 747 (L.E.A.D.) <br> * Page 2, colonne de gauche, lignes 23-59; page 2, colonne de droite, lignes 43-50; figure 1 * <br> -- | 1,2,4-10 | H 02 H 1/06// 3/33 |
| | FR - A - 2 081 177 (SAPEREL) <br> * Page 1, figure unique * <br> -- | 1-9 | |
| | US - A - 4 153 924 (MORAN) <br> * Colonne 4, ligne 53 - colonne 5, ligne 51; figure 3 * <br> -- | 1,3-6, 8-10 | **DOMAINES TECHNIQUES RECHERCHES (Int. Cl.³)** <br><br> H 02 H 1/06 <br> 3/33 <br> 3/347 |
| | US - A - 4 100 587 (ANDERSON et al.) <br> * Colonne 4, ligne 61 - colonne 5, ligne 44; figure 3 * <br> ---- | 7 | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 14-08-1981 | RUGGIU |

OEB Form 1503.1  06.78